# EUROPÄISCHE PATENTSCHRIFT

(11) **EP 2 062 682 B1**
(45) Veröffentlichungstag und Bekanntmachung des Hinweises auf die Patenterteilung: **11.05.2011**
(21) Anmeldenummer: 08105661.6
(22) Anmeldetag: 27.10.2008
(51) Int. Cl.: B25D 17/18, B23Q 11/00

(54) **Staubabsaugung für eine Handwerkzeugmaschine und deren Verwendung**
Dust suction for a hand-held machine tool and use thereof
Aspiration de poussière pour une machine-outil manuelle et son utilisation

(30) Priorität: 26.11.2007 DE 102007056867
(43) Veröffentlichungstag der Anmeldung: 27.05.2009
(73) Patentinhaber: HILTI Aktiengesellschaft, 9494 Schaan (LI)
(72) Erfinder: Fritz, Gerold, 9490 Vaduz (LI); Ontl, Rainer, 86899 Landsberg am Lech (DE)
(74) Vertreter: Söllner, Oliver

(56) Entgegenhaltungen:
- EP-A- 1 245 330
- EP-A- 1 459 842
- DE-A1-102004 029 220

## Beschreibung

Die Erfindung bezeichnet eine modulare Staubabsaugung für eine zumindest teilweise drehende Handwerkzeugmaschine wie einen Bohrhammer oder einen Kombihammer nach dem Oberbegriff des Anspruchs 1 und wie aus der EP 1459 842 A1 bekannt, und die Verwendung der Staubsaugung als Teil eines Maschinensystems mit zumindest zwei verschiedenen Handwerkzeugmaschinen.

Der bei Bohr- und Meisselarbeiten in Gestein, Beton usw. als Bohrmehl anfallende Staub verursacht Nacharbeiten und erhöht den Verschleiss von Handwerkzeugmaschinen.

Nach der DE102004029220A1 wird bei einer mit der antreibenden Handwerkzeugmaschine kombinierbaren modularen Staubabsaugung ein in der Handwerkzeugmaschine zur Kühlung vorhandener Luftstrom benutzt, den ein maschineninterner Lüfter erzeugt. Dazu sind die Abluftöffnungen des Modulgehäuses ausschliesslich an Anlageflächen ausgebildet, die im Wesentlichen luftströmungsdicht an zugeordnet passenden Gehäuseflächen der Handwerkzeugmaschine anliegen, welche ihrerseits Einsaugöffnungen aufweisen.

Die Staubabsaugung nach der EP 0 470 046 A1 und der EP 1 245 330 A2 ist als eine, mit der antreibenden Handwerkzeugmaschine kombinierbare, modulare Einheit ausgeführt, wobei ein modulintemes Saugrad der Staubabsaugung drehfest mit einer antreibenden Welle der Handwerkzeugmaschine verbunden ist. Die nahe am Werkzeug angesaugte Luft mit dem Bohrmehl wird gefiltert und strömungsseitig hinter dem Saugrad über ausschliesslich nach Aussen freiliegende Abluftöffnungen des Modulgehäuses an die Umgebung abgegeben.

Die Aufgabe der Erfindung besteht in der Erhöhung der Saugleistung einer modularen Staubabsaugung mit modulinternem, drehend antreibbarem Saugrad. Ein weiterer Aspekt besteht in der Realisierung einer modularen Staubabsaugung mit identischem Saugverhalten bei zweckbestimmter Verwendung mit unterschiedlich leistungsfähigen Handwerkzeugmaschinen eines Maschinensystems.

Die Aufgabe wird im Wesentlichen durch die Merkmale der unabhängigen Ansprüche 1 und 6 gelöst. Vorteilhafte Weiterbildungen ergeben sich aus den Unteransprüchen.

So weist eine modulare Staubabsaugung, welche an Anlageflächen mit einer zugeordneten Handwerkzeugmaschine kombinierbar ist, einen Luftfilter, ein drehend antreibbares Saugrad und nach Aussen offene Abluftöffnungen auf, wobei zusätzlich in zumindest einer der Anlageflächen nach Aussen offene Zusatzöffnungen ausgebildet sind.

Über die Zusatzöffnungen in den Anlageflächen gelangt ein Teil der Saugluftströmung über zugeordnete Einlassöffnungen der passenden Gehäuseflächen der Handwerkzeugmaschine in deren Kühlluftstrom, wodurch die Saugleistung erhöht wird.

Vorteilhaft ist die Gesamtöffnungsfläche der Zusatzöffnungen kleiner als die der Abluftöffnungen, weiter vorteilhaft etwa zwei Drittel dieser, wodurch die Saugluftströmung in der Staubabsaugung etwa je hälftig durch das modulinterne Saugrad und durch den saugenden Kühlluftstrom der Handwerkzeugmaschine bewirkt wird.

Vorteilhaft ist das Saugrad als (radial innen saugendes) Radialsaugrad ausgebildet, wodurch konstruktiv einfach radial aussen druckseitige Abluft axial beidseitig verfügbar ist.

Vorteilhaft sind die Zusatzöffnungen in der von der Antriebswelle des Saugrades durchsetzten Anlagefläche angeordnet, wodurch diese konstruktiv einfach druckseitig vom Saugrad realisiert sind.

Vorteilhaft sind die Zusatzöffnungen in der von der Antriebswelle des Saugrades durchsetzten Anlagefläche wannenförmig dreiseitig von weiteren Anlageflächen umschlossen, wodurch in diese hineingesetzte Gehäuseflächen der Handwerkzeugmaschine, welche die bodenseitigen und bodennahen Einlassöffnungen aufweisen, von diesen strömungsdicht umschlossen werden.

Die Abluftöffnungen und Zusatzöffnungen der Staubabsaugung können vorteilhaft in einem Maschinensystem genutzt werden, um in zweckentsprechender Verbindung mit verschiedenen zugeordneten Handwerkzeugmaschinen mit unterschiedlichen Motordrehzahlen annäherend die gleiche Saugleistung zur Verfügung zu stellen. Bei ersten Handwerkzeugmaschinen mit einem relativ langsam drehendem Motor (und damit des Saugrades) wird (wie obenstehend beschrieben) die Abluft des Saugluftstroms sowohl vom Saugrad in den freien Raum geblasen als auch direkt von den Lufteinlassöffnungen der Handwerkzeugmaschine als Kühlluftstrom eingesaugt, wodurch das Saugrad entlastet wird. Bei zugeordneten zweiten Handwerkzeugmaschinen mit relativ schnell drehendem Motor (und damit des Saugrades) sind die Lufteinlassöffnungen verschlossen, wodurch die Abluft des Saugluftstroms vollständig vom Saugrad in den freien Raum geblasen werden muss. Durch diese mittels der verkleinerten Gesamtöffnungsfläche, da nur die Abluftöffnungen verfügbar sind, bewirkten Erhöhung der zu fördernden Druckdifferenz steigt der Saugluftstrom trotz der höheren Motordrehzahl (und damit der Drehzahl des Saugrades) nicht an. Für den Nutzer stellt sich somit das Saugverhalten der Staubabsaugung in wahlweise zweckentsprechender Verbindung mit einer von beiden Handwerkzeugmaschinen jeweils gleich dar.

Die Erfindung wird bezüglich eines vorteilhaften Ausführungsbeispiels näher erläutert mit:
- Fig. 1: als modulare Staubabsaugung mit zugeordneter Handwerkzeugmaschine;
- Fig. 2: als vergrösserten Teilausschnitt der Staubabsaugung nach Fig. 1;
- Fig. 3: als Staubabsaugung nach Fig. 1 in Draufsicht;
- Fig. 4: als Staubabsaugung nach Fig. 1 in Ansicht von Unten.

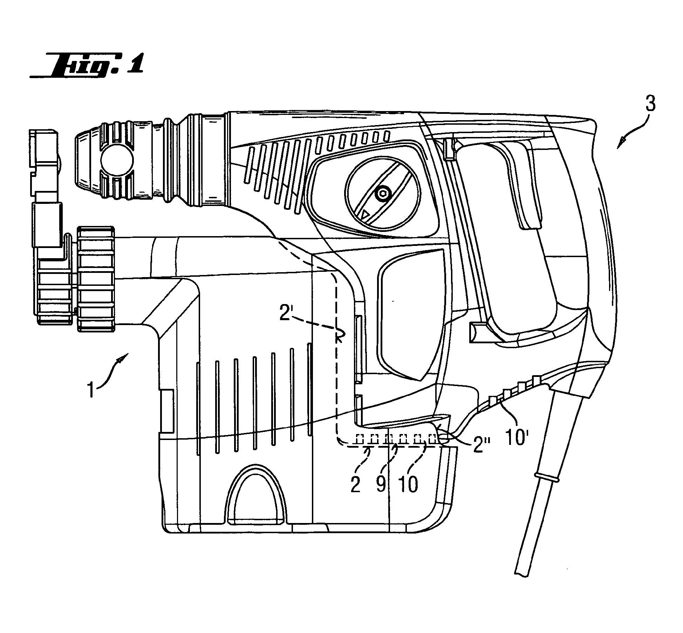

Nach Fig. 1 ist eine modulare Staubabsaugung 1 an Anlageflächen 2, 2', 2" mit einer zugeordneten Handwerkzeugmaschine 3 mit Gehäuseflächen 9 kombiniert, die bodenseitige und bodennahe Einlassöffnungen 10, 10' aufweisen.

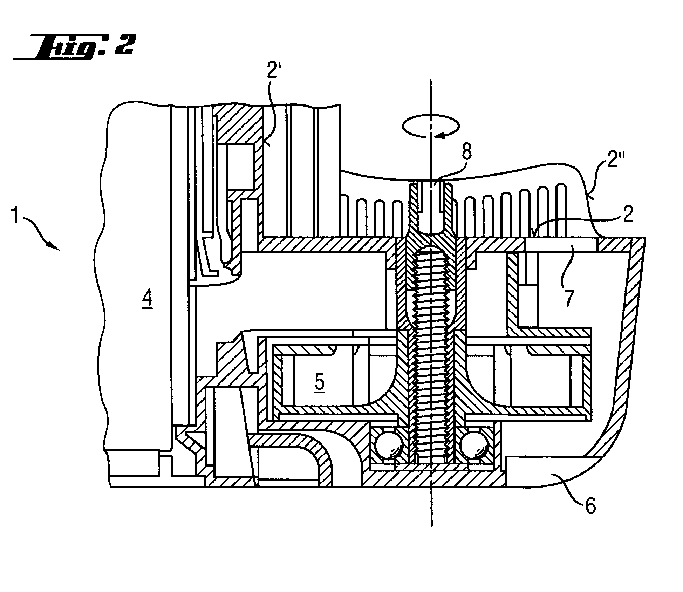

Nach Fig. 2 weist die Staubabsaugung 1 einen Luftfilter 4, ein drehend antreibbares, radial innen saugendes Saugrad 5 in Form eines Radialsaugrades und nach Aussen offene Abluftöffnungen 6 auf, wobei zusätzlich in der Anlagefläche 2 nach Aussen offene Zusatzöffnungen 7 ausgebildet sind. Die Zusatzöffnungen 7 sind in der von der Antriebswelle 8 des Saugrades 5 durchsetzten Anlagefläche 2 ausgebildet und wannenförmig dreiseitig von weiteren Anlageflächen 2', 2" umschlossen, wodurch in diese hineingesetzte Gehäuseflächen 9 (Fig. 1) der Handwerkzeugmaschine 3 (Fig. 1), welche die den Zusatzöffnungen 7 zugeordneten bodenseitigen Einlassöffnungen 10 (Fig. 1) aufweisen, von diesen strömungsdicht umschlossen werden. Die bodennahen Einlassöffnungen 10' bleiben hingegen frei.

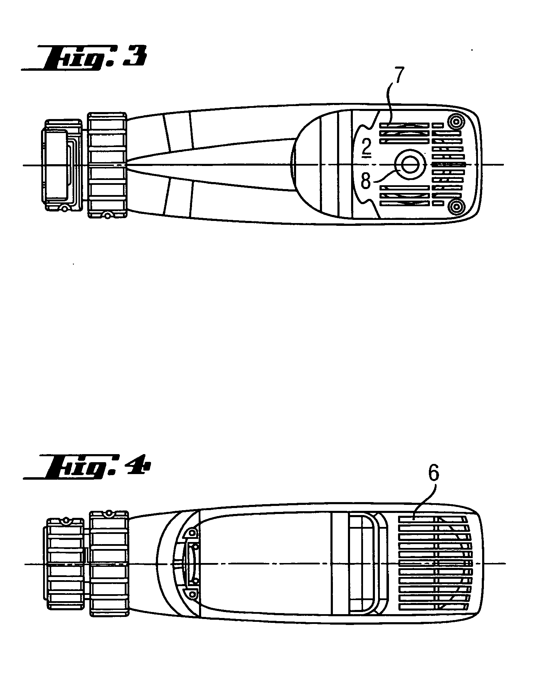

Die in Fig. 3 erkennbare Gesamtöffnungsfläche der Zusatzöffnungen 7, welche in der von der Antriebswelle 8 durchsetzten Anlagefläche 2 angeordnet sind, beträgt zwei Drittel der in Fig. 4 erkennbaren Gesamtöffnungsfläche der Abluftöffnungen 6.

## Patentansprüche

1. Modulare Staubabsaugung, welche an Anlageflächen (2, 2', 2") mit einer zugeordneten Handwerkzeugmaschine (3) kombinierbar ist sowie einen Luftfilter (4), ein drehend antreibbares Saugrad (5) und nach Aussen offene Abluftöffnungen (6) aufweist, **dadurch gekennzeichnet, dass** zusätzlich in zumindest einer der Anlageflächen (2) nach Aussen offene Zusatzöffnungen (7) ausgebildet sind.

2. Staubabsaugung nach Anspruch 1, **dadurch gekennzeichnet, dass** die Gesamtöffnungsfläche der Zusatzöffnungen (7) kleiner als die der Abluftöffnungen (6) ist.

3. Staubabsaugung nach Anspruch 1 oder 2, **dadurch gekennzeichnet, dass** das Saugrad (5) als Radialsaugrad ausgebildet ist.

4. Staubabsaugung nach einem der Ansprüche 1 bis 3, **dadurch gekennzeichnet, dass** die Zusatzöffnungen (7) in der von der Antriebswelle (8) des Saugrades (5) durchsetzten Anlagefläche (2) angeordnet sind.

5. Staubabsaugung nach Anspruch 4, **dadurch gekennzeichnet, dass** die Zusatzöffnungen (7) in der von der Antriebswelle (8) des Saugrades (5) durchsetzten Anlagefläche (2) wannenförmig dreiseitig von weiteren Anlageflächen (2', 2") umschlossen sind.

6. Verwendung der Staubabsaugung nach einem der Ansprüche 1 bis 5 als Teil eines Maschinensystems mit zumindest zwei verschiedenen Handwerkzeugmaschinen (3), wobei den Zusatzöffnungen (7) bei einer ersten Handwerkzeugmaschine (3) zumindest einige Lufteinlassöffnungen (10) zugeordnet sind und bei einer zweiten Handwerkzeugmaschine (3) sämtliche Lufteinlassöffnungen (10') den Zusatzöffnungen (7) nicht zugeordnet sind.

## Claims

1. Modular dust suction, which may be combined with an allocated hand-held machine tool (3) on contact surfaces (2, 2', 2") and has an air filter (4), a drivable turning suction wheel (5) and exhaust air openings (6) opening outwards, **characterised in that** additional openings (7) opening outwards are also made in at least one of the contact surfaces (2).

2. Dust suction according to claim 1, **characterised in that** the total opening surface of the additional openings (7) is smaller than that of the exhaust air openings (6).

3. Dust suction according to claim 1 or 2, **characterised in that** the suction wheel (5) is made as a radial suction wheel.

4. Dust suction according to one of claims 1 to 3, **characterised in that** the additional openings (7) are arranged in the contact surface (2) penetrated by the drive shaft (8) of the suction wheel (5).

5. Dust suction according to claim 4, **characterised in that** the additional openings (7) in the contact surface (2) penetrated by the drive shaft (8) of the suction wheel (5) are surrounded on three sides by other trough shaped contact surfaces (2', 2").

6. Use of dust suction according one of claims 1 to 5 as part of a machine system with at least two different hand-held machine tools (3), in which at least some air inlet openings (10) are allocated to the additional openings (7) in a first hand-held machine tool (3) and all air inlet openings (10') are not allocated to the additional openings (7) in a second hand-held machine tool (3).

## Revendications

1. Aspirateur de poussière modulaire, lequel peut être combiné, à l'aide de surfaces d'appui (2, 2', 2"), à un appareil portatif associé (3) et comprend un filtre à air (4), une roue aspirante entraînée en rotation (5) et des ouvertures d'évacuation d'air (6) ouvertes vers l'extérieur, **caractérisé en ce que** des ouvertures supplémentaires (7) ouvertes vers l'extérieur sont ménagées en plus dans au moins une des surfaces d'appui (2).

2. Aspirateur de poussière selon la revendication 1, **caractérisé en ce que** la surface d'ouverture totale des ouvertures supplémentaires (7) est inférieure à celle des ouvertures d'évacuation d'air (6).

3. Aspirateur de poussière selon la revendication 1 ou 2, **caractérisé en ce que** la roue aspirante (5) est conformée en roue aspirante radiale.

4. Aspirateur de poussière selon une des revendications 1 à 3, **caractérisé en ce que** les ouvertures supplémentaires (7) sont ménagées dans la surface d'appui (2) traversée par l'arbre d'entraînement (8) de la roue aspirante (5).

5. Aspirateur de poussière selon la revendication 4, **caractérisé en ce que** les ouvertures supplémentaires (7) ménagées dans la surface d'appui (2) traversée par l'arbre d'entraînement (8) de la roue aspirante (5) sont entourées sur trois côtés par d'autres surfaces d'appui (2, 2") formant cuvette.

6. Utilisation de l'aspirateur de poussière selon une des revendications 1 à 5 en tant que partie d'un système mécanique comprenant au moins deux appareils portatifs (3) différents, au moins quelques ouvertures d'admission d'air (10) étant associées aux ouvertures supplémentaires (7) dans un premier appareil portatif (3), et toutes les ouvertures d'admission d'air (10') n'étant pas associées aux ouvertures supplémentaires (7) dans un second appareil portatif (3).
